# FASCICULE DE BREVET EUROPEEN

(11) **EP 3 514 014 B1**
(45) Date de publication et mention de la délivrance du brevet: **04.05.2022**
(21) Numéro de dépôt: 19152681.3
(22) Date de dépôt: 18.01.2019
(51) Int. Cl.: B60Q 3/64, B60Q 3/217, B60Q 3/54, B60Q 3/78

(54) **SYSTÈME DE DÉCOR COMPRENANT UN DISPOSITIF DE DÉCOR MONTÉ DANS UNE STRUCTURE DE SUPPORT TEL QU'UN AGENCEMENT D'HABILLAGE NOTAMMENT D'UN VÉHICULE AUTOMOBILE**
DEKORSYSTEM, DAS EINE DEKORVORRICHTUNG UMFASST, DIE IN EINE HALTERUNGSSTRUKTUR WIE EINE VERKLEIDUNGSANORDNUNG INSBESONDERE EINES KRAFTFAHRZEUGS MONTIERT IST
SYSTEM FOR DECORATION INCLUDING A DEVICE FOR DECORATION MOUNTED IN A SUPPORT STRUCTURE SUCH AS A COVERING ARRANGEMENT, IN PARTICULAR OF A MOTOR VEHICLE

(30) Priorité: 19.01.2018 FR 1850456
(43) Date de publication de la demande: 24.07.2019
(73) Titulaire: Eurostyle Systems Tech Center France, 36000 Châteauroux (FR)
(72) Inventeur: CHAUSSET, François, 36250 SAINT-MAUR (FR); FRAUDET, Sébastien, 36330 LE POINÇONNET (FR)
(74) Mandataire: Berger, Helmut

(56) Documents cités:
- DE-A1-102004 053 133
- DE-A1-102014 201 730
- DE-A1-102015 103 850
- FR-A1- 2 927 859
- FR-A1- 2 977 212
- JP-A- 2009 279 999
- JP-B2- 5 666 288
- JP-B2- 5 666 288
- US-A1- 2001 036 082
- US-A1- 2015 009 707

## Description

L'invention concerne un système de décor comprenant un dispositif de décor tel qu'un décor lumineux ou un liseré, monté dans une structure de support tel qu'un agencement d'habillage notamment d'un véhicule automobile, le dispositif de décor comprenant un profil en forme d'une bande souple comportant une partie qui s'étend dans la direction longitudinale de la bande et porte au niveau de son bord longitudinal libre un élément de décor, et une partie longitudinale de la bande qui constitue la partie de fixation sur la structure de support.

DE102015103850A1 divulgue une fourniture intérieure pour automobile ou aéronef qui comporte un guide d'ondes optique recouvert en sections par un couvercle constitué d'un matériau opaque. DE102014201730A1 divulgue un composant d'intérieur de véhicule avec guidage de lumière dans un alésage et sous des peaux.

L'invention a pour but d'améliorer les systèmes de décor existants.

Pour atteindre ce but, le système selon l'invention est caractérisé par les caractéristiques techniques de la revendication 1.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant plusieurs modes de réalisation de l'invention et dans lesquels :
- La figure 1 est une vue en perspective d'un dispositif de décor lumineux, adapté pour être fixé par couture dans une structure de support ;
- la figure 2 est une vue en perspective d'un accoudoir d'un panneau de porte d'un véhicule automobile, pourvu d'un dispositif de décor lumineux ;
- la figure 3 est une vue en coupe selon la ligne III - III de la figure 2 et illustre la fixation du profil de décor lumineux de la figure 1 dans l'accoudoir du panneau de porte de la figure 2, le dispositif de décor lumineux de la figure 3 n'entre pas dans le cadre de l'invention;
- les figures 4 et 5 sont des vues en coupe similaires à la figure 3, mais illustrent deux dispositifs de décor lumineux, adaptés pour être fixés par couture dans une structure de support, à savoir entre deux revêtements, et seul celui de la figure 5 est selon l'invention ;
- la figure 6 illustre une forme particulière d'un dispositif de décor lumineux selon l'invention.

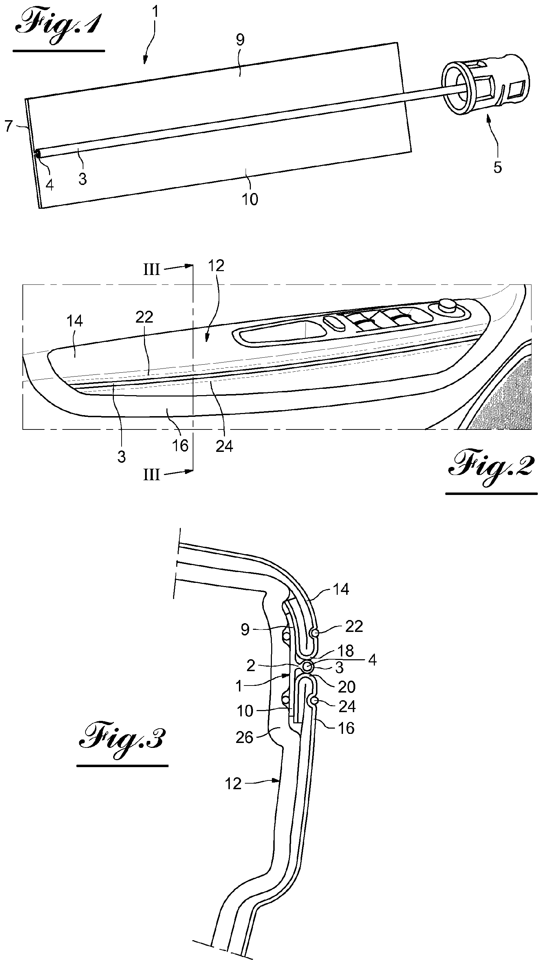

L'invention sera décrite ci-après, à titre d'exemple non limitatif, dans son application à un agencement d'habillage d'un véhicule automobile, plus précisément d'un accoudoir de panneau de porte tel que représenté à la figure 2. Bien entendu, le dispositif de décor selon l'invention peut prendre place dans différents éléments d'habillage de véhicule automobile ou d'autre structure par exemple dans des habillages d'ébénisteries intérieures, des accoudoirs de console et de tout autre genre d'habillage approprié.

Le décor peut être de différentes natures, par exemple un décor lumineux ou en forme de liseré. On décrira ci-après, à titre d'exemple non limitatif le système dans son mode de réalisation à décor lumineux.

La figure 1 montre, toujours à titre d'exemple, un premier mode de réalisation d'un dispositif de décor lumineux. Comme on le voit, le dispositif est formé par un profil 1 souple présentant la forme d'une bande qui présente une section transversale en forme d'un T. L'extrémité libre de la partie 2 qui constitue la jambe du T est configurée de façon à former au niveau de son bord longitudinal libre une gaine qui s'étend sur toute la longueur de la bande et à laquelle est intégré un dispositif de fibres optiques 4 connecté à une source de lumière 5 avantageusement de type LED, et une zone longitudinale 7, qui est configurée pour permettre la fixation du profil dans la structure de support. Cette partie perpendiculaire à la jambe est formée par deux ailes 9 et 10 de fixation du profil dans la structure de support, l'une à droite et l'autre à gauche de la jambe 2 et qui s'étendent également sur toute la longueur de la bande.

La gaine est adaptée pour assurer une diffusion de la lumière propagée par la fibre optique sur toute sa longueur.

Le dispositif de décor lumineux de la figure 1 est adapté pour être monté par couture dans un accoudoir de panneau de porte 12 tel que celui de la figure 2, par exemple, de la manière illustrée sur la figure 3. La figure 2 montre la gaine à laquelle est intégré le dispositif de fibres optiques 4, entre le revêtement supérieur 14 et le revêtement inférieur 16 de l'accoudoir 12.

Sur la figure 3, le profil 1 ayant la section transversale de la forme générale d'un T est fixé dans le revêtement de l'accoudoir de panneau de porte au moyen de ses deux ailes de fixation 9 et 10 qui sont cousues respectivement sur la partie de revêtement supérieure 14 sur la partie de revêtement inférieure 16. La gaine est insérée entre les bords recourbés 18 et 20 des parties de revêtement. La figure indique en 22 la couture supérieure et en 24 la courbure inférieure.

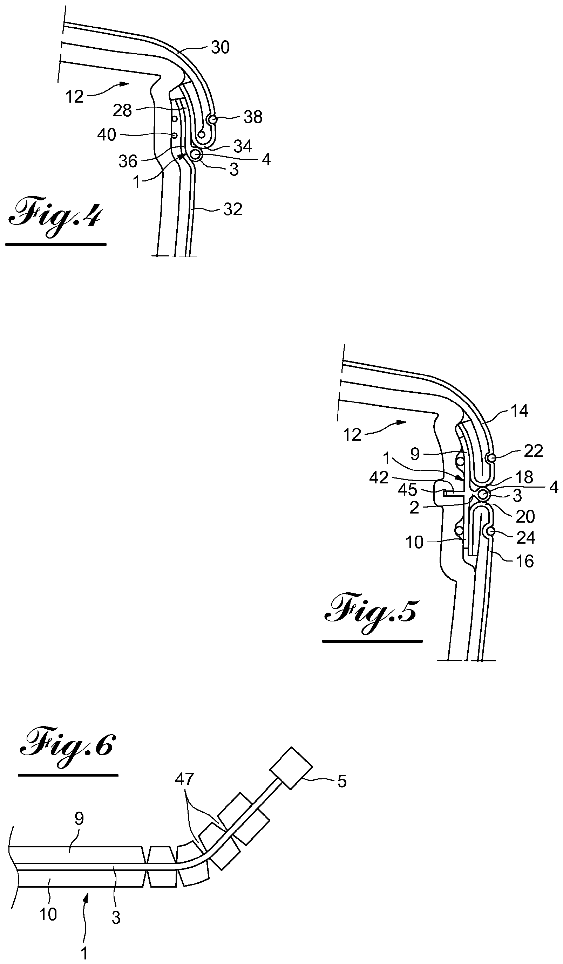

Comme le montre la figure 6, ces découpes 47 peuvent être prévues dans les parties du profil 1, qui sont destinées à être fortement courbées. La forme des découpes et l'écart entre deux découpes adjacentes sera avantageusement choisie en fonction de la courbure souhaitée. Les découpes peuvent avoir la forme d'un V plus ou moins ouvert et qui se rétrécit en direction de la profondeur de la découpe. Ainsi le profil est aisément déformable dans le plan de l'aile ou des ailes de fixation, c'est-à-dire latéralement par rapport à la partie porteuse de l'élément de décor.

Comme le montrent encore les figures, le profil est configuré pour être aussi déformable et donc adaptable à des supports fortement courbés dans la direction de la branche du T qui porte l'élément de décor 3, du fait que cette branche peut être très courte. Dans le cas de la figure 5, la déformabilité dans le sens perpendiculaire aux ailes de fixation et donc dans la direction de la branche porteuse de l'élément de décor peut être assurée en faisant des découpes dans la nervure de positionnement 42, perpendiculairement à la direction longitudinale du profil.

Le système de décor lumineux selon l'invention présente de multiples avantages. Les fibres optiques ne conduisent ni électricité, ni chaleur et peuvent être utilisées comme moyen de communication et d'éclairage d'ambiance dans des domaines d'application très différents.

Le système selon l'invention permet d'obtenir des effets lumineux plus ou moins fins tout en ayant de très faibles encombrements, une basse consommation électrique et une durée de vie élevée.

L'invention permet de réaliser des dessins lumineux d'une grande variété dû à la forme et le positionnement du profil par rapport aux pièces environnantes et en donnant à la gaine guide de lumière une forme appropriée, qui pourrait être circulaire, bombée, affleurante, désaffleurante ou encore différente. De plus, la mise en œuvre de l'invention ne nécessite pas des investissements industriels complexes et onéreux.

Il est à noter que le système à décor lumineux n'a été décrit et représenté qu'à titre d'exemple non limitatif. Tout autre type de décor tel qu'un décor utilisant un liseré à la place de la gaine à fibres optiques peut être envisagé.

## Revendications

1. Système de décor comprenant un dispositif de décor tel qu'un décor lumineux ou un liseré et comprenant une structure de support (12) tel qu'un agencement d'habillage d'un véhicule automobile, le dispositif de décor étant monté dans la structure de support (12), le dispositif de décor comprenant un profil (1) en forme d'une bande souple comportant une partie dite de décor qui s'étend dans la direction longitudinale de la bande et qui porte au niveau de son bord longitudinal libre un élément de décor (3) et une partie de fixation (7) sur la structure de support (12) qui s'étend dans la direction longitudinale de la bande, la partie de fixation (7) étant adaptée pour être fixée par couture sur la structure de support (12), le système de décor étant **caractérisé en ce que** le profil (1) présente, en section transversale, la forme d'un T, que l'extrémité libre de la jambe (2) du T constitue l'élément de décor (3), tandis que les parties perpendiculaires situées de part et d'autre de la jambe constituent des ailes de fixation (9, 10) du profil sur la structure de support (12) et **en ce que** la bande comprend une nervure (42) de positionnement coopérant avec la structure de support (12).

2. Système de décor selon la revendication précédente, **caractérisé en ce que** la bande comprend des découpes (47) perpendiculaires à la direction longitudinale de la bande.

3. Système de décor selon l'une des revendications précédentes, **caractérisé en ce que** l'élément de décor (3) est inséré entre des bords recourbés des deux parties (14, 16) du revêtement auxquelles les ailes (9, 10) sont cousues.

4. Système de décor selon l'une des revendications précédentes, **caractérisé en ce que** l'élément de décor (3) est une gaine dans laquelle est intégré un dispositif de fibres optiques (4) connecté à une source de lumière.

5. Système de décor selon la revendication précédente, **caractérisé en ce que** la gaine est une gaine de diffusion de la lumière sur toute sa longueur.

6. Système de décor selon l'une des revendications 1 à 3 **caractérisé en ce que** l'élément de décor (3) est un liseré.

7. Système de décor selon la revendication 2, **caractérisé en ce que** les découpes (47) sont prévues dans des parties du profil (1) en forme de bande qui sont destinées à être fortement courbées.

8. Procédé de montage d'un dispositif de décor tel qu'un décor lumineux ou un liseré, dans une structure de support (12) tel qu'un agencement d'habillage d'un véhicule automobile, le dispositif de décor comprenant un profil (1) en forme d'une bande souple comportant une partie dite de décor qui s'étend dans la direction longitudinale de la bande et qui porte au niveau de son bord longitudinal libre un élément de décor (3), et une partie de fixation (7) sur la structure de support (12) qui s'étend dans la direction longitudinale de la bande, la partie de fixation (7) étant adaptée pour être fixée par couture sur la structure de support (12), le procédé étant **caractérisé en ce que** le profil (1) présente, en section transversale, la forme d'un T, l'extrémité libre de la jambe (2) du T constituant l'élément de décor (3), tandis que les parties perpendiculaires situées de part et d'autre de la jambe constituent des ailes de fixation (9, 10) du profil sur la structure de support (12), le procédé comprenant une coopération d'une nervure (42) de positionnement de la bande avec la structure de support (12).

## Patentansprüche

1. Dekorsystem, das eine Dekorvorrichtung wie z. B. ein Leuchtdekor oder eine Umrandung umfasst, und das eine Halterungsstruktur (12) wie z. B. eine Verkleidungsanordnung eines Kraftfahrzeugs umfasst, wobei die Dekorvorrichtung in die Halterungsstruktur (12) montiert ist, wobei die Dekorvorrichtung eine Profil (1) in Form eines flexiblen Bands umfasst, das einen Teil, bezeichnet als Dekorteil, aufweist, der sich in der Längsrichtung des Bands erstreckt, und der auf der Ebene seines freien Längsrands ein Dekorelement (3) und einen Befestigungsteil (7) auf der Halterungsstruktur (12) trägt, der sich in der Längsrichtung des Bands erstreckt, wobei der Befestigungsteil (7) ausgelegt ist, um durch Nähen auf der Halterungsstruktur (12) befestigt zu sein, wobei das Dekorsystem **dadurch gekennzeichnet ist, dass** das Profil (1) im Querschnitt die Form eines T aufweist, dass das freie Ende des Fußes (2) des T das Dekorelement (3) darstellt, während die senkrechten Teile, die sich auf beiden Seiten des Fußes befinden, Befestigungsflügel (9, 10) des Profils auf der Halterungsstruktur (12) darstellen, und dadurch, dass das Band eine Positionierungsrippe (42) umfasst, die mit der Halterungsstruktur (12) zusammenarbeitet.

2. Dekorsystem nach dem vorhergehenden Anspruch, **dadurch gekennzeichnet, dass** das Band Ausschnitte (47) senkrecht zur Längsrichtung des Bands umfasst.

3. Dekorsystem nach einem der vorhergehenden Ansprüche, **dadurch gekennzeichnet, dass** das Dekorelement (3) zwischen gekrümmten Rändern der zwei Teile (14, 16) der Verkleidung eingeführt ist, an die die Flügel (9, 10) genäht sind.

4. Dekorsystem nach einem der vorhergehenden Ansprüche, **dadurch gekennzeichnet, dass** das Dekorelement (3) eine Hülle ist, in die eine Vorrichtung aus optischen Fasern (4), verbunden mit einer Lichtquelle, integriert ist.

5. Dekorsystem nach dem vorhergehenden Anspruch, **dadurch gekennzeichnet, dass** die Hülle eine Hülle zur Diffusion des Lichts auf ihrer gesamten Länge ist.

6. Dekorsystem nach einem der Ansprüche 1 bis 3, **dadurch gekennzeichnet, dass** das Dekorelement (3) eine Umrandung ist.

7. Dekorsystem nach Anspruch 2, **dadurch gekennzeichnet, dass** die Ausschnitte (47) in Teilen des Profils (1) in Form eines Bands vorgesehen sind, die ausgelegt sind, um stark gekrümmt zu sein.

8. Verfahren zur Montage eines Dekorelements wie z. B. eines Leuchtdekors oder einer Umrandung in einer Halterungsstruktur (12) wie z. B. einer Verkleidungsanordnung eines Kraftfahrzeugs, wobei die Dekorvorrichtung eine Profil (1) in Form eines flexiblen Bands umfasst, das einen Teil, bezeichnet als Dekorteil, aufweist, der sich in der Längsrichtung des Bands erstreckt, und der auf der Ebene seines freien Längsrands ein Dekorelement (3) und einen Befestigungsteil (7) auf der Halterungsstruktur (12) trägt, der sich in der Längsrichtung des Bands erstreckt, wobei der Befestigungsteil (7) ausgelegt ist, um durch Nähen auf der Halterungsstruktur (12) befestigt zu sein, wobei das Verfahren **dadurch gekennzeichnet ist, dass** das Profil (1) im Querschnitt die Form eines T aufweist, wobei das freie Ende des Fußes (2) des T das Dekorelement (3) darstellt, während die senkrechten Teile, die sich auf beiden Seiten des Fußes befinden, Befestigungsflügel (9, 10) des Profils auf der Halterungsstruktur (12) darstellen, wobei das Verfahren eine Zusammenarbeit einer Positionierungsrippe (42) des Bands mit der Halterungsstruktur (12) umfasst.

## Claims

1. A system for decoration comprising a device for decoration such as a lighted decoration or a striping and comprising a support structure (12) such as a covering arrangement of a motor vehicle, the device for decoration being mounted in the support structure (12),
the device for decoration comprising a profile (1) in the form of a flexible strip including a part called decorative part that extends in the longitudinal direction of the strip and that bears, at its free longitudinal edge, a decorative element (3) and a fixing part (7) on the support structure (12) that extends in the longitudinal direction of the strip, the fixing part (7) being configured to be fixed by sewing on the support structure (12), the system for decoration being **characterized in that** the profile (1) is T-shaped in cross-section, that the free end of the leg (2) of the T constitutes the decorative element (3), while the perpendicular parts located on either side of the leg constitute fixing wings (9, 10) of the profile on the support structure (12) and **in that** the strip comprises a positioning rib (42) cooperating with the support structure (12) .

2. The system for decoration according to the preceding claim, **characterized in that** the strip comprises cutouts (47) perpendicular to the longitudinal direction of the strip.

3. The system for decoration according to one of the preceding claims, **characterized in that** the decorative element (3) is inserted between the curved edges of the two covering parts (14, 16) to which the wings (9, 10) are sewn.

4. The system for decoration according to one of the preceding claims, **characterized in that** the decorative element (3) is a sheath in which a fiber-optic device (4) is integrated that is connected to a light source.

5. The system for decoration according to the preceding claim, **characterized in that** the sheath is a sheath for diffusing light over its entire length.

6. The system for decoration according to one of claims 1 to 3, **characterized in that** the decorative element (3) is a striping.

7. The system for decoration according to claim 2, **characterized in that** the cutouts (47) are provided in parts of the profile (1) in strip form that are intended to be strongly curved.

8. A method for mounting a device for decoration such as a lighted decoration or a striping, in a support structure (12) such as a covering arrangement of a motor vehicle, the device for decoration comprising a profile (1) in the form of a flexible strip including a part called decorative part that extends in the longitudinal direction of the strip and that bears, at its free longitudinal edge, a decorative element (3), and a fixing part (7) on the support structure (12) that extends in the longitudinal direction of the strip, the fixing part (7) being configured to be fixed by sewing on the support structure (12), the method being **characterized in that** the profile (1) is T-shaped in cross-section, the free end of the leg (2) of the T constituting the decorative element (3), while the perpendicular parts located on either side of the leg constitute fixing wings (9, 10) of the profile on the support structure (12), the method comprising a cooperation of a positioning rib (42) of the strip with the support structure (12).
